# EUROPEAN PATENT SPECIFICATION

(11) **EP 0 286 683 B1**
(45) Date of publication and mention of the grant of the patent: **15.12.1993**
(21) Application number: 87905650.5
(22) Date of filing: 27.08.1987
(51) Int. Cl.: F16K 31/122

(54) **HYDRAULIC PILOT TYPE DIRECTION CONTROL VALVE**
HYDRAULISCHES RICHTUNGS-VORSTEUERVENTIL
SOUPAPE PILOTE HYDRAULIQUE DE COMMANDE DE DIRECTION

(30) Priority: 01.09.1986 JP 132766/86
(43) Date of publication of application: 19.10.1988
(73) Proprietor: HITACHI CONSTRUCTION MACHINERY CO., LTD., Chiyoda-ku Tokyo 100 (JP)
(72) Inventor: HIRATA, Toichi, Ibaraki 300-12 (JP); TANAKA, Hideaki, Niiharigun Ibaraki 315 (JP); SUGIYAMA, Genroku 2337, Oyama, Ibaraki 300-04 (JP); SATOH, Shinichi Tsukubaryonai, Niiharigun Ibaraki 315 (JP)
(74) Representative: Beetz & Partner Patentanwälte
(86) International application number: PCT/JP87/00635
(87) International publication number: WO 88/01706

(56) References cited:
- JP-A- 4 865 382
- JP-A- 5 154 418
- US-A- 1 938 772

## Description

The present invention relates to a hydraulic pilot operated directional control valve according to the preamble portion of the patent claim. Such a hydraulic pilot operated valve is known from JP-A-51 54418.

Hitherto, a hydraulic pilot operated directional control valve has widely been used to control flow of hydraulic fluid supplied to hydraulic actuators in a hydraulic machine such as a hydraulic excavator or the like, to control motion of the hydraulic actuators.

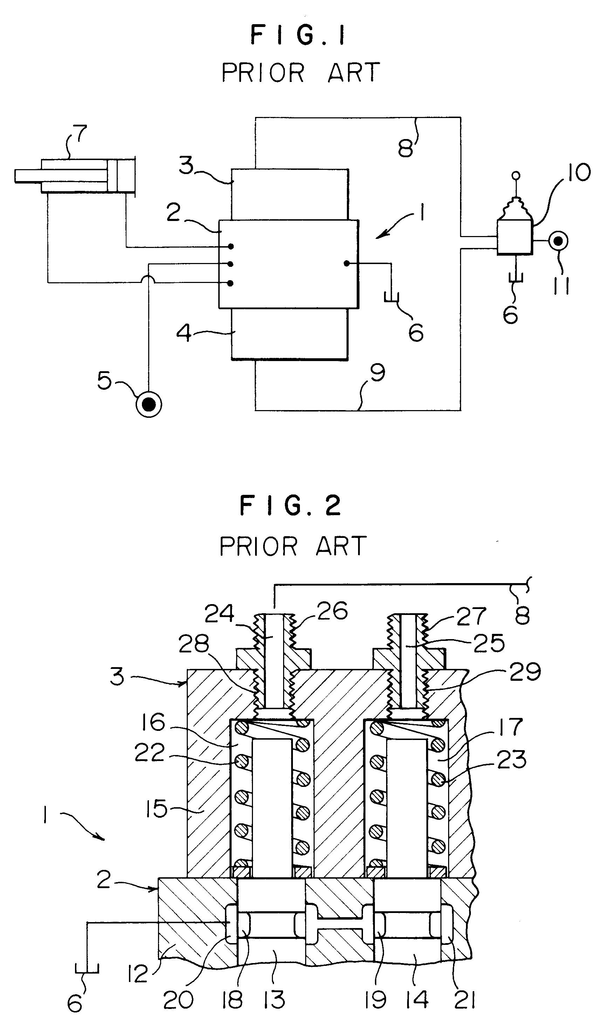

Fig. 1 shows a hydraulic circuit having incorporated therein such hydraulic pilot operated directional control valve as known from JP-A-48-65382. In the figure, the reference numeral 1 denotes the hydraulic pilot operated directional control valve which is composed of a valve body section 2 and hydraulic pilot operating sections 3 and 4. The valve body section 2 is connected to a hydraulic pressure source 5 and a reservoir 6, and is connected to a hydraulic actuator 7, for controlling flow of hydraulic fluid supplied from the hydraulic pressure source 5 to the hydraulic actuator 7. The operating sections 3 and 4 are connected to a pilot valve 10 through respective pilot lines 8 and 9. The pilot valve 10 is adapted to generate a pilot pressure for controlling operation of the valve body section 2. The reference numeral 11 denotes a pilot hydraulic pressure source for the pilot valve 10.

Usually, the directional control valve 1 is formed into a multi-spool valve having accommodated therein a plurality of spools. The directional control valve 1 has connected thereto pilot valves and pilot lines corresponding in number to the spools. Fig. 1, however, shows only the hydraulic actuator 7 and a pilot circuit 8, 9, 10 with respect to one of the valve elements, for convenience of illustration.

As shown in Fig. 2, the directional control valve 1 has a plurality of spools 13 and 14 which are accommodated, for sealing movement, in a block 12 of the valve body section 2. The directional control valve 1 also has a plurality of pilot hydraulic pressure chambers 16 and 17 which are formed in a block 15 of the operating section 3 in a manner corresponding respectively to the plurality of spools 13 and 14.

Various grooves for controlling flow of the hydraulic fluid are formed in outer peripheral surfaces of the respective spools 13 and 14 and in opposed inner peripheral surfaces of the block 12. Of these grooves, Fig. 2 shows only drain grooves 18 through 21. The grooves 20 and 21 in the block 12 are connected to the reservoir 6 so that the hydraulic fluid is returned to the reservoir 6 through the grooves 20 and 21.

The pilot hydraulic pressure chambers 16 and 17 have accommodated respectively therein springs 22 and 23 for applying return forces respectively to the spools 13 and 14. Adapters 26 and 27 having therein respective pilot ports 24 and 25 are mounted to the block 15 through respective threadedly engaging portions 28 and 29. The pilot pressure is introduced into the pilot hydraulic pressure chambers 16 and 17 through the respective pilot ports 24 and 25. The adapter 26 is connected to the pilot valve 10 through the pilot line 8, while the adapter 27 is connected to a pilot line and a pilot valve which are not shown.

Although not shown, the hydraulic pilot operating section 4 is constructed in a manner similar to the operating section 3.

In this hydraulic pilot operated directional control valve 1, as the pilot valve 10 is operated, the pilot pressure is led from the pilot port 24 of the adapter 26 into the pilot hydraulic pressure chamber 16 through one of the pilot lines 8 and 9, for example, the pilot line 8, depending upon the direction in which the pilot valve 10 is operated. By this pilot pressure, the spool 13 is moved downwardly as viewed in the figure, to cause the hydraulic fluid from the hydraulic pressure source 5 to be supplied to the hydraulic actuator 7 through a plurality of grooves, not shown, formed in the spool 13 and the block 12, thereby driving the actuator 7. The returning hydraulic fluid from the hydraulic actuator 7 is returned to the reservoir 6 through the grooves 18 and 20.

By the way, in the hydraulic pilot operated directional control valve 1 constructed in this manner, air mingled in the pilot hydraulic fluid might be accumulated within the pilot hydraulic pressure chambers 16 and 17. If air is accumulated within the pilot hydraulic pressure chambers 16 and 17, switching speed, that is, responsibility of the hydraulic pilot operated directional control valve 1 with respect to the pilot pressure is deteriorated. Accordingly, in such case, so-called air bleeding is carried out in such a manner that the adapters 26 and 27 are detached from the block 15 to release air within the pilot hydraulic pressure chambers 16 and 17 to the outside.

However, operation of manually attaching and detaching the adapters 26 and 27 is considerably troublesome. In particular, it has taken time to remove oil adhering to the adapters 26 and 27 and the like. Moreover, even if the air bleeding has once been carried out, similar air bleeding has again been required to be effected after the elapse of a predetermined period of time, thus involving the maintenance cost.

JP-A-51 54418 discloses a hydraulic pilot operated valve comprising an air bleeding means formed in the valve body and closed with a plug.

US-A-1 938 772 discloses a hydraulic actuator having an air bleeding groove which is thread-like and continuously and spirally formed. The function of that groove is not to mount a certain member onto the cylinder head. The groove is an air bleeding means expressly provided for this special function. The air bleeding channel is not a gas resulting from the threaded engagement.

JP-A-48-65382 discloses a hydraulic pilot operated directional control valve, comprising at least one pilot hydraulic pressure chamber formed within a block of a hydraulic pilot operating section of the valve, a drain passageway provided in the vicinity of said pilot hydraulic pressure chamber within said block, an adapter for connecting a pilot line to said pilot hydraulic pressure chamber, said adapter being threadedly attached to said block.

It is an object of the invention to provide a hydraulic pilot operated directional control valve in which release of air accumulated within a pilot hydraulic pressure chamber to the outside can be carried out automatically without the need of manual operation, and within which any structural elements for bleeding air are needed, making the valve very simple and maintenance free.

This object is accomplished with a hydraulic valve according to the claim.

### BRIEF DESCRIPTION OF THE DRAWINGS

Fig. 1 is a circuit diagram showing a hydraulic circuit in which a conventional hydraulic pilot operated directional control valve according to JP-A-48-65382 is incorporated;
Fig. 2 is a cross-sectional view of a principal portion of the hydraulic pilot operated directional control valve;
Fig. 3 is a circuit diagram showing a hydraulic circuit in which a hydraulic pilot operated directional control valve according to an embodiment of the invention is incorporated;
Fig. 4 is a cross-sectional view of a principal portion of the hydraulic pilot operated directional control valve.

### BEST MODE FOR CARRYING OUT THE INVENTION

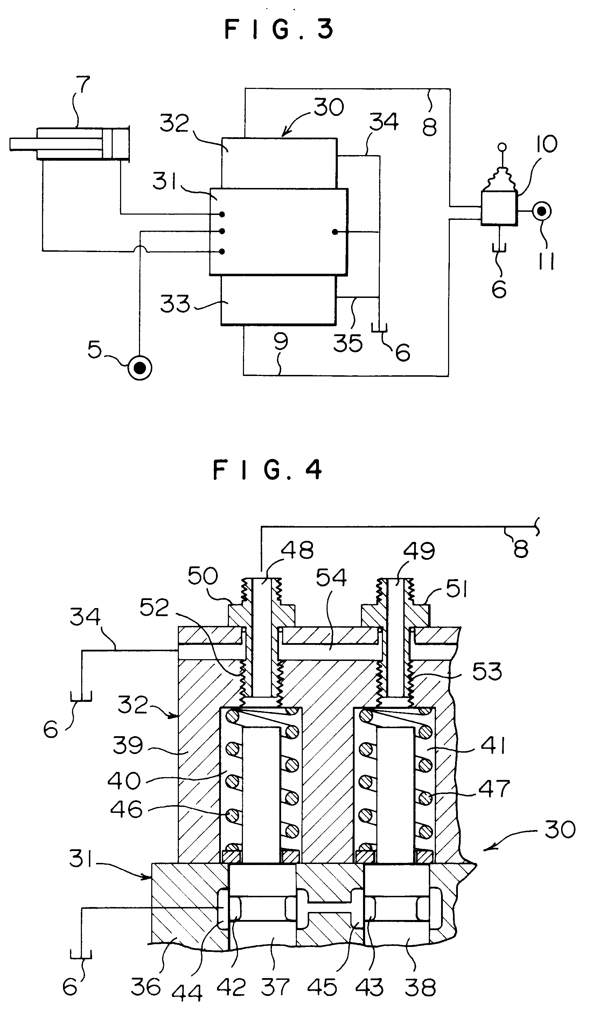

Embodiments of the invention will be described below with reference to Figs. 3 and 4.

In Fig. 3, the reference numeral 30 denotes a hydraulic pilot operated directional control valve according to an embodiment of the invention. The control valve 30 is composed of a valve body section 31 and hydraulic pilot operating sections 32 and 33. In Fig. 3, like reference numerals are used to designate component parts like those illustrated in Fig. 1. That is, the valve body section 31 is connected to a hydraulic pressure source 5 and a reservoir 6, and is connected to a hydraulic actuator 7, for controlling flow of hydraulic fluid supplied from the hydraulic pressure source 5 to the hydraulic actuator 7. The operating sections 32 and 33 are connected to a pilot valve 10 through respective pilot lines 8 and 9. The pilot valve 10 is adapted to generate pilot pressure for controlling operation of the valve body section 31. The operating sections 32 and 33 are also connected to the reservoir 6 through respective drain lines 34 and 35 for the purposes subsequently to be described. The reference numeral 11 denotes a pilot hydraulic pressure source for the pilot valve 10.

The directional control valve 30 is preferably formed into a multi-spool valve having accommodated therein a plurality of spools. The directional control valve 30 has connected thereto pilot valves and pilot lines corresponding in number to the spools. Fig. 3, however, shows only the hydraulic actuator 7 and a pilot circuit 8, 9, 10 with respect to one of the valve elements, for convenience of illustration.

As shown in Fig. 4, the directional control valve 30 has a plurality of spools 37 and 38 which are accommodated, for sealing movement, within a block 36 of the valve body section 31. The directional control valve 30 also has a plurality of pilot hydraulic pressure chambers 40 and 41 formed within a block 39 of the operating section 32 in a manner corresponding respectively to the plurality of spools 37 and 38.

Various grooves for controlling flow of the hydraulic fluid are formed in outer peripheral surfaces of the respective spools 37 and 38 and in opposed inner peripheral surfaces of the block 36. Of the grooves, Fig. 4 shows only drain grooves 42 through 45. The grooves 44 and 45 in the block 36 are connected to the reservoir 6 so that the hydraulic fluid is returned to the reservoir 6 through the grooves 44 and 45.

Accommodated respectively in the pilot hydraulic pressure chambers 40 and 41 are springs 46 and 47 for applying return forces respectively to the spools 37 and 38. Adapters 50 and 51 having therein respective pilot ports 48 and 49 are mounted to the block 39. The pilot pressure is introduced into the pilot hydraulic pressure chambers 40 and 41 through the respective pilot ports 48 and 49. The adapters 50 and 51 are detachably mounted to the block 39 through respective threadedly engaging portions 52 and 53 which are constituted respectively by threaded engagement of male threads formed on the adapters with female threads formed in the block 39.

A drain passageway 54 independent of the drain grooves 44 and 45 formed in the block 36 of the valve body section 31 is provided in the vicinity of the pilot hydraulic pressure chambers 40 and 41 within the block 39. The drain passageway 54 is connected to the reservoir 6 through the above-mentioned drain line 34.

The aforesaid threadedly engaging portions 52 and 53 are located from the respective pilot hydraulic pressure chambers 40 and 41 to the drain passageway 54. The pilot hydraulic pressure chambers 40 and 41 communicate with the drain passageway 54 through respective gaps at the threadedly engaging portions 52 and 53. The gaps at the respective threadedly engaging portions 52 and 53 have their respective cross-sectional flow passage areas of the order that enables passage of air, but almost prevents passage of the pilot hydraulic fluid. Thus, the gaps constitute minute passageway means for bleeding air.

Although not shown, the operating section 33 is likewise constructed.

In the embodiment constructed in this manner, air accumulated within the pilot hydraulic pressure chambers 40 and 41 is led to the drain passageway 54 through the gaps at the respective threadedly engaging portions 52 and 53, and is released to the reservoir 6 through the drain line 34. In this connection, since the drain passageway 54 is provided independently of the drain grooves 44 and 45 in the valve body section 31, bleeding of air is effected excellently without being influenced by the pressure of the hydraulic fluid in the grooves. This makes it possible to effect air bleeding automatically without carrying out attaching and detaching of the adapters 48 and 49. Thus, no special working is required for the air bleeding, making it possible to reduce the maintenance cost.

Additionally, the inventors of this application ascertained the following fact. That is, the pilot hydraulic fluid within the pilot hydraulic pressure chambers 40 and 41 also flowed out into the drain passageway 54 through the gaps at the respective threadedly engaging portions 52 and 53, depending upon the manufacturing accuracy of the threads at the threadedly engaging portions 52 and 53. However, in case of the hydraulic fluid high in viscosity as compared with air, an outflow amount of the hydraulic fluid was extremely slight, for example, of the order of several tens cc/min. The amount of such order did not substantially influence usual moving action of the spools 37 and 38.

As will be clear from the foregoing, accordng to the hydraulic pilot operated directional control valve of the invention, release of air accumulated within the pilot hydraulic pressure chamber or chambers to the outside can be effected automatically. Thus, the manual operation required for air bleeding of this kind, which has conventionally been carried out, can be dispensed with, thereby making it possible to reduce the maintenance cost involved in this operation.

## Claims

1. A hydraulic pilot operated directional control valve comprising:
at least one pilot hydraulic pressure chamber (40, 41) formed within a block of a hydraulic pilot operating section (3, 4) of the valve (1),
a drain passageway (54) provided in the vicinity of said pilot hydraulic pressure chamber (40, 41) within said block (39),
an adapter (50, 51) for connecting a pilot line to said pilot hydraulic pressure chamber (40, 41), said adapter (50, 51) being threadedly attached to said block(39),
an air bleeding means for bleeding air in said pilot hydraulic pressure chamber (40, 41) to said drain passageway (54), **characterized by** said air bleeding means including a gap formed in said threadedly engaging portion (52, 53) of said adapter (50, 51) and said block (39) extending between said pilot hydraulic pressure chamber (40, 41) and drain passageway.

## Patentansprüche

1. Hydraulisches Richtungsvorsteuerventil mit:
mindestens einer hydraulischen Druckvorkammer (40, 41), die in einem Block eines hydraulischen Vorsteuerbereichs (3, 4) des Ventils (1) geformt ist,
einem Drainagekanal (54), der in der Nähe der hydraulischen Druckvorkammer (40, 41) in dem Block (39) angeordnet ist,
einem Adapter (50, 51) zur Verbindung der Steuerleitung mit der hydraulischen Druckvorkammer (40, 41), wobei der Adapter (50, 51) in dem Block (39) schraubbefestigt ist, und
mit Entlüftungsmitteln zum Entlüften von Luft aus der hydraulischen Druckvorkammer (40, 41) in den Drainagekanal (54),
dadurch **gekennzeichnet,** daß die Entlüftungsvorrichtung einen Spalt aufweist, der in dem Gewindebereich (52, 53) des Adapters (50, 51) geformt ist und daß der Block (39) sich zwischen der hydraulischen Druckvorkammer (40, 41) und dem Drainagekanal erstreckt.

## Revendications

1. Distributeur piloté hydrauliquement comprenant :
au moins une chambre de pression hydraulique pilote (40, 41) formée à l'intérieur d'un bloc d'une section de pilotage hydraulique (3, 4) de la valve (1),
un passage d'évacuation (54) formé au voisinage de ladite chambre de pression hydraulique pilote (40, 41) à l'intérieur dudit bloc (39),
un adaptateur (50, 51) pour raccorder une canalisation pilote à ladite chambre de pression hydraulique pilote (40, 41), et l'adaptateur étant vissé audit bloc (39),
un moyen de purge d'air pour purger l'air se trouvant dans la chambre de pression hydraulique pilote (40, 41), vers ledit passage d'évacuation (54),
caractérisé en ce que le moyen de purge d'air comprend un interstice formé dans ladite partie de vissage (52, 53) de l'adaptateur (50, 51) et le bloc (39) s'étendant entre la chambre de pression hydraulique pilote (40, 41) et le passage d'évacuation.
